# EUROPÄISCHE PATENTANMELDUNG

(11) **EP 1 091 535 A2**
(43) Veröffentlichungstag der Anmeldung: **11.04.2001**
(21) Anmeldenummer: 00121880.9
(22) Anmeldetag: 06.10.2000
(51) Int. Cl.: H04L 29/06

(54) **Verfahren und elektronische Einheiten zur Übertragung von Sprachdaten in Datenpaketen unter Nutzung zusätzlicher Leistungsmerkmale sowie zugehörige Einheiten und Programme**

(30) Priorität: 08.10.1999 US 415376
(71) Anmelder: SIEMENS AKTIENGESELLSCHAFT, 80333 München (DE)
(72) Erfinder: Coen, Guy, Dr., 9300 Aalst (BE); Korpi, Markku, 82319 Starnberg (DE); Mueller, Harald, Dr., 82205 Gilching (DE)

(57) **Zusammenfassung**

Erläutert wird ein Verfahren zur Übertragung von Sprachdaten in Datenpaketen unter Nutzung zusätzlicher Leistungsmerkmale. Beim Benutzen der zusätzlichen Leistungsmerkmale in einem Endgerät (10) für die Übertragung von Sprachdaten in Datenpaketen wird eine Vermittlungseinrichtung (12) zum Durchschalten von Sprachverbindungen verwendet, bei denen Sprachdaten in Sprachkanälen übertragen werden.

## Beschreibung

Die Erfindung betrifft ein Verfahren zur Übertragung von Sprachdaten in Datenpaketen unter Nutzung zusätzlicher Leistungsmerkmale. Eine paketbasiert arbeitende Endeinheit sendet und empfängt Sprachdaten in Datenpaketen. Auf der Seite der Endeinheit ist neben den Grundfunktionen zur Übertragung von Sprachsignalen mindestens ein zusätzliches Leistungsmerkmal für die Übertragung von Sprachdaten in Datenpaketen nutzbar.

Ein Datenpaket enthält üblicherweise mehrere Datenworte mit einer vorgegebenen Anzahl Bitstellen, beispielsweise sogenannte Oktetts mit acht Bitstellen. Generell lassen sich in einem Datenpaket Oktetts unterscheiden, die zum Datenkopf gehören. In den Daten des Datenkopfes ist beispielsweise das Ziel des Datenpaketes angegeben. Andererseits sind im Datenkopf beispielsweise auch Daten enthalten, welche die Art des Datenpaketes festlegen. Zusätzlich zum Datenkopf gibt es in der Regel Oktetts, welche die Nutzinformation enthalten, beispielsweise die Sprachdaten. Es werden auch Datenworte übertragen, die einen Endabschnitt des Datenpaketes bilden und beispielsweise eine Prüfsumme zur Fehlererkennung und Fehlerkorrektur enthalten.

Standards für Verfahren zur Übertragung von Sprachdaten in Datenpaketen werden unter anderem in den folgenden ITU-T-Empfehlungen (International Telecommunication Union-Telecommunication) vorgegeben:
- H.323, "Packet based multimedia communications systems", 02/98,
- H.450.1, "Generic functional protocol for the support of supplementary services in H.323", 27. Januar 1998,
- H.450.2, "Call transfer supplementary service for H.323", 27. Januar 1998, und
- H.450.3, "Call diversion supplementary service for H.323", 27. Januar 1998.

Im Standard H.323 wird das Grundkonzept für eine Übertragung von Multimediadaten in Datenpaketen standardisiert. Dieses Grundkonzept gilt insbesondere auch für die Übertragung von Sprachdaten.

Der Standard H.450.1 enthält allgemeine Festlegungen für die Verfahren und Signalisierungsprotokolle zur Realisierung von zusätzlichen Leistungsmerkmale bei der Verbindung zwischen sogenannten H.323 Geräten, d.h. Geräten, die gemäß Standard H.323 arbeiten. Der Standard H.405.1 bildet somit die Grundlage für die Standards H.450.2 und H.450.3, die einzelne Leistungsmerkmale betreffen.

Der Standard H.450.2 enthält für das Leistungsmerkmal "Rufübergabe" Festlegungen. Bei dem Leistungsmerkmal "Rufübergabe" baut ein rufender A-Teilnehmer zuerst eine Verbindung zu einem gerufenen B-Teilnehmer auf. Bei aufgebauter Verbindung ruft der A-Teilnehmer dann einen dritten C-Teilnehmer an und legt danach auf. Nach dem Auflegen des A-Teilnehmers besteht eine Verbindung zwischen dein B-Teilnehmer und dem C-Teilnehmer.

Der Standard H.450.3 enthält Vorgaben für das Leistungsmerkmal "Rufumlenkung". Diese Leistungsmerkmal ermöglicht es, daß vor dem Aufbau einer Verbindung der Ruf an ein anderes Endgerät umgeleitet wird.

Gemäß der Standards H.450.2 und H.450.3 werden die Leistungsmerkmale in der Regel in den Endgeräten selbst zur Verfügung gestellt. Die Endgeräte sind deshalb komplex aufgebaut und haben ein umfangreiches Programmsystem. Eine zentrale Instanz für die Leistungsmerkmale wird in der Regel nicht benötigt.

Herkömmliche Sprachendgeräten übertragen die Sprachdaten in Datenkanälen. Im einfachsten Fall wird ein Sprachkanal durch eine Leitung gebildet, die nur für eine einzige Verbindung genutzt wird. Über die Leitung werden analoge oder digitale Sprachdaten ohne Unterbrechung durch Informationen zur Verbindungssteuerung ausgetauscht. Meist werden jedoch auf einer Leitung im Zeitmultiplexverfahren die zu verschiedenen Verbindungen gehörenden Sprachdaten übertragen. Innerhalb zeitlich aufeinanderfolgender Zeitrahmen ist für jede Verbindung zum Übertragen der Sprachdaten ein Zeitabschnitt festgelegt.

Bei herkömmlichen ISDN-Endgeräten (Integrated Services Digital Network) und insbesondere bei Systemtelefonen an privaten Vermittlungsanlagen (PBX - private branch exchange) gibt es eine Vielzahl weiterer zusätzlicher Leistungsmerkmale, beispielsweise:
- Anklopfen,
- Gebührenanzeige,
- Dreierkonferenz,
- Rückfrage,
- Makeln,
- Sperre von abgehenden Verbindungen,
- Verbindung ohne Wahl, sogenannter Babyruf, und
- Rückruf bei besetzt.

Es ist zu erwarten, daß auch für diese zusätzlichen Leistungsmerkmale nach und nach von der ITU Standards vorgegeben werden, die Vorgaben zur Nutzung der Leistungsmerkmale bei einer Übertragung von Sprachdaten in Datenpaketen enthalten. Bis zum Festlegen solcher Standards werden jedoch noch mehrere Jahre vergehen. Nach der Veröffentlichung verbindlicher Standards müssen diese in Programme zur Ansteuerung von H.323-Endgeräten umgesetzt werden, so daß noch einmal eine Entwicklungszeit vorzusehen ist. Erst danach kann der Benutzer von H.323-Endgeräten alle zusätzlichen Leistungsmerkmale verwenden, die bei ISDN-Endgeräten und Systemtelefonen für die Sprachübertragung in einem Sprachkanal bereits üblich sind. Eine ähnliche Situation gibt es auch bei anderen Verfahren der Übertragung von Sprachdaten in Datenpaketen.

Es ist Aufgabe der Erfindung, einfache Verfahren zur Übertragung von Sprachdaten in Datenpaketen mit zusätzlichen Leistungsmerkmalen anzugeben, bei denen zusätzliche Leistungsmerkmale ohne großen Standardisierungs-, Entwicklungs- bzw. Programmieraufwand für Endeinheiten nutzbar sind. Weiterhin sollen elektronische Einheiten und Programme angegeben werden, die zur Durchführung der Verfahren dienen.

Die auf die Verfahren bezogene Aufgabe wird durch ein Verfahren mit den im Patentanspruch 1 angegebenen Verfahrensschritten gelöst. Weiterbildungen sind in den Unteransprüchen angegeben.

Der Erfindung liegt die Überlegung zugrunde, daß in Vermittlungseinrichtungen zum Durchschalten von Sprachverbindungen in einem durchschaltevermittelten Telekommunikationsnetz, d.h. in einem Netz, bei dem Sprachdaten in Sprachkanälen übertragen werden, zusätzliche Leistungsmerkmale seit langem vorhanden sind, z.B. in Telekommunikationsanlagen der Firma SIEMENS AG. Weil die Leistungsmerkmale zentral in der Vermittlungseinrichtung realisiert sind, sind die an der Vermittlungseinrichtung anzuschließenden Endgeräte vergleichsweise einfach aufgebaut. Beispielsweise wird von einem Telefon der Wunsch, ein Leistungsmerkmal zu nutzen, an die Vermittlungseinrichtung signalisiert. Daraufhin wird das Leistungsmerkmal der Vermittlungseinrichtung aktiviert. Die Vermittlungseinrichtung sendet an das Telefon beim Verwenden des Leistungsmerkmals ebenfalls Signale, mit denen z.B. Signaltöne erzeugt oder Ziffernfolgen zum Telefon gesendet werden.

Die Erfindung geht außerdem von der Erkenntnis aus, daß es möglich ist, bezüglich der zusätzlichen Leistungsmerkmale in den Endgeräten für die Übertragung von Sprachdaten in Datenpaketen wie in den direkt, d.h. ohne Schnittstelleneinheit zur Umwandlung von Übertragungssignalen, an die Vermittlungseinrichtung anzuschließenden Endgeräten für die Übertragung von Sprachdaten im Sprachkanal auf die Realisierung des Leistungsmerkmals zu verzichten. Damit lassen sich auch die paketbasiert arbeitenden Endgeräte einfach aufbauen, weil nur Maßnahmen für die Signalisierung zwischen Endgerät und Vermittlungseinrichtung im Endgerät durchzuführen sind. Dagegen müssen im Endgerät keine Maßnahmen durchgeführt werden, welche die eigentliche Leistungsfunktion betreffen.

Beim erfindungsgemäßen Verfahren wird die paketbasiert arbeitende Endeinheit mit Hilfe einer Schnittstelleneinheit an die Vermittlungseinrichtung angeschlossen. Die Schnittstelleneinheit wandelt von der Vermittlungseinrichtung kommende Übertragungssignale in Übertragungssignale für die Endeinheit und von der Endeinheit kommende Übertragungssignale in Übertragungssignale für die Vermittlungseinrichtung um. Beim erfindungsgemäßen Verfahren werden während des Benutzens des zusätzlichen Leistungsmerkmals in der Vermittlungseinrichtung zur Steuerung des paketbasiert arbeitenden Endgeräts solche Verfahrensschritte ausgeführt, die bei der Nutzung des zusätzlichen Leistungsmerkmals in der Vermittlungseinrichtung zur Steuerung eines an der Vermittlungseinrichtung ohne Schnittstelleneinheit zur Protokollumwandlung anschließbaren Endgerätes für die Übertragung von Sprachdaten in einem Sprachkanal auszuführen sind. Die in der Vermittlungsstelle ausgeführten Verfahrensschritte sind somit bei Endgeräten für die Übertragung von Sprachdaten in Datenpaketen und bei Endgeräten für die Übertragung von Sprachdaten in einem Sprachkanal gleich. Die Schnittstelleneinheit schließt das Endgerät für die Übertragung von Sprachdaten in Datenpaketen letztlich so an die Vermittlungsstelle an, als wäre es ein Endgerät für die Übertragung von Sprachdaten in einem Sprachkanal.

Beim erfindungsgemäßen Verfahren steuert die Vermittlungseinrichtung beim Nutzen der Leistungsmerkmale das Endgerät.

Steuern bedeutet, daß durch in der Vermittlungseinrichtung ausgeführten Verfahrensschritte Verfahrensschritte im Endgerät ausgelöst werden. Die Steuerung erfolgt so, daß jedem Verfahrensschritt in der Vermittlungsstelle ein Verfahrensschritt im Endgerät entspricht. Steuerbefehle von der Vermittlungseinrichtung müssen somit an das Endgerät weitergeleitet werden.

Beim erfindungsgemäßen Verfahren lassen sich die bekannten Leistungsmerkmale auf einfache Art nutzen, weil in dem paketorientiert arbeitenden Endgerät nur ein vergleichsweise kleines Programm für die Signalisierung an die Vermittlungsstelle und für die Auswertung der von der Vermittlungsstelle kommenden Signalisierung gespeichert werden muß. Ein Programm zur Realisierung der Leistungsmerkmale selbst ist in den paketorientiert arbeitenden Endgeräten nicht erforderlich. Durch das erfindungsgemäße Verfahren können die bekannten und bereits implementierten Leistungsmerkmale bei einer Verbindung zwischen einem paketbasiert arbeitenden Endgerät und einem direkt an die Vermittlungseinrichtung anschließbaren Endgerät für die Übertragung von Sprachdaten in einem Sprachkanal genutzt werden. Die Leistungsmerkmale lassen sich auch dann nutzen, wenn zwei paketbasiert arbeitende Endgeräte jeweils einen Anschluß an eine Vermittlungseinrichtung haben.

Bei einer Weiterbildung des erfindungsgemäßen Verfahrens wird das zusätzliche Leistungsmerkmal auf der Seite der Endeinheit ausgewählt. Beispielsweise entscheidet sich der die paketbasiert arbeitende Endeinheit nutzende Benutzer dazu, eine sogenannte Dreierkonferenz einzuleiten. Die Endeinheit signalisiert der Schnittstelleneinheit die Auswahl gemäß einem Datenpakete verwendenden Signalisierungsprotokoll für paketbasiert arbeitende Datenübertragungsnetze. Die Schnittstelleneinheit leitet die empfangenen Signalisierungsdaten gemäß einem für die Vermittlungseinrichtung festgelegten Signalisierungsprotokoll an die Vermittlungseinrichtung weiter. Somit wird in der Schnittstelleneinheit das Signalisierungsprotokoll geändert. Beispielsweise lassen sich die Signalisierungsprotokolle durch eine eindeutige Abbildung der Signalisierungsdaten des einen Signalisierungsprotokolls auf die Signalisierungsdaten des anderen Signalisierungsprotokolls ändern. Die Schnittstelleneinheit sendet an die Vermittlungseinrichtung nur solche Signalisierungsdaten, wie sie auch von einem ohne die Schnittstelleneinheit zur Protokolländerung an die Vermittlungseinrichtung anschließbaren Endgerät für die Übertragung von Sprachdaten in einem Sprachkanal erzeugt werden.

Bei einer anderen Weiterbildung des erfindungsgemäßen Verfahrens wird die zusätzliche Leistungsmerkmal auf der Seite der Vermittlungseinrichtung ausgewählt. Dies erfolgt entweder durch ein an die Vermittlungseinrichtung angeschlossenes herkömmliches Endgerät, z.B. durch ein digitales Telefon für den Fernsprechverkehr oder durch ein über eine andere Schnittstelleneinheit angeschlossenes Endgerät für die Übertragung von Sprachdaten in Datenpaketen. Die Vermittlungseinrichtung führt das Leistungsmerkmal aus und sendet beim Ausführen des zusätzlichen Leistungsmerkmals gemäß einem für die Vermittlungseinrichtung festgelegten Signalisierungsprotokoll Signale bzw. Signalisierungsdaten an die Schnittstelleneinheit. Diese Signale stimmen mit Signalen überein, die beim Ausführen der zusätzlichen Leistungsmerkmal für ein ohne die Schnittstelleneinheit anschließbares herkömmliches Endgerät zu senden wären.

Bei dem für die Vermittlungseinrichtung festgelegten Signalisierungsprotokoll handelt es sich beispielsweise um ein firmeninternes Signalisierungsprotokoll des Herstellers der Vermittlungseinrichtung. Beispielsweise wird ein solches Signalisierungsprotokoll zur Signalisierung zwischen der Telekommunikationsanlage HICOM der Firma SIEMENS AG und einem Endgerät vom Typ OPTISET verwendet. Bei der Weiterentwicklung des erfindungsgemäßen Verfahrens wird die Schnittstelleneinheit von der Vermittlungseinrichtung wie ein Endgerät angesteuert, das Sprachdaten in einem Sprachkanal überträgt.

Die Schnittstelleneinheit leitet bei der Weiterbildung des erfindungsgemäßen Verfahrens die empfangenen Signale gemäß einem Datenpakete verwendenden Signalisierungsprotokoll für paketorientiert arbeitende Datenübertragungsnetze weiter. Somit verändert die Schnittstelleneinheit auch in der anderen Richtung, d.h. von der Vermittlungseinrichtung zur Endeinheit hin, das Signalisierungsprotokoll.

Das Signalisierungsprotokoll für die Vermittlungseinrichtung ist meist ein sogenanntes Stimulus-Protokoll, bei dem an das Endgerät nur einfache Anweisungen gesendet werden, die im Endgerät eine für den Benutzer sichtbare Signalisierung bewirken, z.B. die Ausgabe von Signaltönen oder die Anzeige von Ziffern auf einer Ziffernanzeige. Das Endgerät signalisiert seinerseits bei einem Stimulus-Protokoll nur einfache Signale an die Vermittlungseinrichtung, beispielsweise das Abheben des Hörers oder die Betätigung einer bestimmten Taste. Das paketbasierte Signalisierungsprotokoll für das Endgerät ist dagegen meist ein sogenanntes funktionales Protokoll, bei dem abhängig vom internen Schaltzustand des Endgeräts signalisiert wird. Die Anpassung von Stimulus-Protokoll und funktionalem Protokoll läßt sich durchführen, indem beispielsweise in der Schnittstelleneinheit der Schaltzustand des Endgerätes bzw. auch der Schaltzustand der Vermittlungseinrichtung nachgebildet wird. Dies ist möglich, weil die Abfolge der Schaltzustände in der Vermittlungseinrichtung als auch die Abfolge der Schaltzustände in einem direkt an der Vermittlungseinrichtung anschließbaren Endgerät bekannt sind.

Bei Vermittlungsstellen, in denen zur Steuerung ein funktionales Protokoll verwendet wird, läßt sich die Umsetzung in das zwischen der Schnittstelleneinheit und dem Endgerät verwendete Signalisierungsprotokoll noch einfacher durchführen, als bei einem Stimulus-Protokoll. Bei einem funktionalen Protokoll gibt es nämlich für jede Funktion einen bestimmten Befehl in der Vermittlungsstelle. Demzufolge muß vom Endgerät ein solcher Befehl erzeugt werden und zur Schnittstelleneinheit übertragen werden. In der Schnittstelleneinheit kann dann für jeden Befehl ein eigenes Umwandlungsverfahren durchgeführt werden.

Verwendet werden aber auch Verfahren, bei denen mit Hilfe des sogenannten Tunnelns eine Protokollanpassung durchgeführt wird. Beim Tunneln werden Endgeräte verwendet, die von der Vermittlungsstelle kommende Befehle verarbeiten. Diese Befehle werden in der Signalisierungseinheit in Befehle eingebettet, die zwischen der Signalisierungseinheit und dem Endgerät in Datenpaketen übertragen werden. In der anderen Richtung erzeugt das Endgerät Befehle für die Vermittlungsstelle, die jedoch ebenfalls in Datenpakete eingebettet werden. In der Signalisierungseinheit werden die Datenpakete entpackt und die Befehle unverändert an die Steuerung der Vermittlungsstelle weitergeleitet. Dabei wird der Befehlsinhalt nicht verändert. Ändern sich die in der Vermittlungsstelle verwendeten Befehle, so sind in der Vermittlungsstelle und in den Endgeräten nur Programme zu verändern, die ohnehin zu verändern wären, um die neuen Befehle zu benutzen. Die Programme in der Schnittstelleneinheit müssen dagegen nicht verändert werden.

Als Signalisierungsprotokoll für das Endgerät wird bei einer anderen Weiterbildung ein nach dem ITU-T-Standard H.323 arbeitendes Signalisierungsprotokoll verwendet. Der Standard läßt eine Erweiterung um neue Signalisierungsbefehle zu, welche die Nutzung zusätzlicher Leistungsmerkmale oder das Tunnein betreffen. Arbeitet das für die Vermittlungseinrichtung festgelegte Signalisierungsprotokoll ebenfalls auf der Basis von Datenpaketen, wie es bei modernen Vermittlungseinrichtungen der Fall ist, so vereinfacht sich der Aufbau der Signallsierungseinheit.

Bei einer Ausgestaltung des erfindungsgemäßen Verfahrens werden die Sprachdaten gemäß einem Übertragungsprotokoll für Datenpakete von der Endeinheit zur Schnittstelleneinheit übertragen. Die Schnittstelleneinheit entpackt die Sprachdaten und leitet die empfangenen Sprachdaten gemäß einem für Sprachübertragung in einem Sprachkanal festgelegten Protokoll an die Vermittlungseinrichtung weiter. Somit führt die Schnittstelle eine Umwandlung des Übertragungsprotokolls für von der Endeinheit zur Vermittlungseinrichtung übertragene Sprachdaten durch.

Bei einer anderen Weiterbildung wird auch eine Umwandlung der Übertragungsprotokolle in der anderen Richtung durchgeführt. Dabei sendet die Vermittlungseinrichtung Sprachsignale zur Schnittstelleneinheit gemäß einem Verfahren für Sprachübertragung in einem Sprachkanal. Die Schnittstelleneinheit leitet die empfangenen Sprachsignale gemäß einem Übertragungsprotokoll für paketbasierte Übertragung an die Endeinheit weiter.

Als Übertragungsprotokoll für die Sprachdaten wird bei einer Ausgestaltung ein Protokoll verwendet, das dem ITU-T-Standard H.323 entspricht. Das Verfahren für die Übertragung im Sprachkanal ist in einer Weiterbildung ein Zeitmultiplexverfahren, z.B. ein PCM-Verfahren (pulse code multiplex).

Bei einer Weiterbildung des erfindungsgemäßen Verfahrens ist die Endeinheit mit der Schnittstelleneinheit über ein Datenübertragungsnetz verbunden, in welchem Daten auf der Basis von Datenpaketen übertragen werden. Am Datenübertragungsnetz ist mindestens ein Endgerät angeschlossen, mit dem Sprachdaten im Datenübertragungsnetz übertragen werden können. Als Datenübertragungsnetz wird beispielsweise das Internet oder ein Intranet verwendet, in welchem das Internet-Protokoll IP/TCP (Internet Protocol/Transfer Control Protocol) verwendet wird. Durch diese Maßnahmen lassen sich Endgeräte auf einfache Art mit einer Vermittlungseinrichtung verbinden.

Bei einer anderen Weiterentwicklung kontrolliert eine am Datenübertragungsnetz angeschlossene Zugangseinrichtung den Zugang vom Endgerät zum Datenübertragungsnetz. In der Zugangseinrichtung wird eine Umwandlung der Rufnummer des durchschaltevermittelten Telekommunikationsnetzes in eine Adresse eines Endgerätes des Datenübertragungsnetzes oder in umgekehrter Richtung durchgeführt. Diese Umwandlung läßt sich in der Zugangseinrichtung auf einfache Art realisieren, weil dort ohnehin Grundfunktionen für eine solche Umwandlung vorhanden sein müssen. Die Zugangseinrichtung wird englisch auch als "Gatekeeper" bezeichnet.

Die Erfindung betrifft außerdem für die paketorientierte Sprachübertragung eine Anschlußbaugruppe mit der das oben erläuterte Verfahren bzw. dessen Ausgestaltungen durchgeführt werden. Somit gelten die oben genannten technischen Wirkungen auch für die Anschlußbaugruppe.

Ein weiterer Aspekt der Erfindung betrifft eine Vermittlungseinrichtung mit der erfindungsgemäßen Baugruppe. Durch den Einsatz der Baugruppe werden die in der Vermittlungseinrichtung vorhandenen Leistungsmerkmale auch für eine paketbasierte Sprachübertragung zugänglich.

Ein nächster Aspekt der Erfindung betrifft ein Gerät, das die erfindungsgemäße Anschlußbaugruppe enthält. Für die erfindungsgemäße Vermittlungseinrichtung und das erfindungsgemäße Gerät gelten somit ebenfalls die oben genannten technischen Wirkungen.

Die oben angegebene Aufgabe wird außerdem durch ein Verfahren gelöst, das die Verfahrensschritte gemäß Patentanspruch 14 enthält und mit dem ersten erfindungsgemäßen Verfahren eng zusammenhängt, weil ähnliche Schritte ausgeführt werden ,die jedoch auf das Endgerät bezogen sind. Bei dem zweiten erfindungsgemäßen Verfahren überträgt eine Sprachübertragungseinheit des Endgerätes Sprachdaten gemäß einem paketbasierten Übertragungsprotokoll. In einer Bedienschnittstelle ist neben den Grundfunktionen zur Übertragung von Sprachsignalen mindestens eine zusätzliche Leistungsmerkmal für die paketorientierte Sprachübertragung nutzbar. Eine Signalisierungseinheit überträgt Signalisierungsdaten gemäß einem paketbasierten Signalisierungsprotokoll zwischen einem Datenübertragungsnetz zum Übertragen von Datenpaketen und dem Endgerät. Beim Benutzen des zusätzlichen Leistungsmerkmals in der Sprachübertragungseinheit wird die Signalisierungseinheit so angesteuert, daß in das Datenübertragungsnetz Signalisierungsbefehle gesendet werden, die anzeigen, daß die zusätzliche Leistungsmerkmal benutzt werden soll. Alternativ oder zusätzlich werden die von der Signalisierungseinheit aus dem Datenübertragungsnetz empfangenen Signale überprüft und es wird beim Empfang von Signalen, die die Nutzung der Leistungsmerkmal anzeigen, die Sprachübertragungseinheit und/oder die Bedienschnittstelle so angesteuert, wie es das Leistungsmerkmal erfordert. Für das zweite erfindungsgemäße Verfahren gelten die oben genannten technischen Wirkungen, weil diese Wirkungen auch auftreten, wenn nur die Endeinheit betrachtet wird, die zum Durchführen des ersten erfindungsgemäßen Verfahrens geeignet ist. Das zweite erfindungsgemäße Verfahren wird auch bei den Weiterentwicklungen des ersten erfindungsgemäßen Verfahrens eingesetzt.

Die Erfindung betrifft außerdem eine Einheit und ein Programm, die für die paketorientierte Sprachübertragung gemäß dem zweiten erfindungsgemäßen Verfahren bzw. gemäß dessen Weiterbildungen verwendet werden. Die für das zweite erfindungsgemäße Verfahren genannten technischen Wirkungen gelten auch für das Gerät und das Programm.

Im folgenden werden Ausführungsbeispiele der Erfindung an Hand der beiliegenden Zeichnungen erläutert. Darin zeigen:
- Figur 1: den Anschluß eines paketbasiert arbeitenden Endgeräts an eine Telekommunikationsanlage,
- Figur 2: den Aufbau einer Anschlußbaugruppe für den Anschluß des Endgeräts an die Telekommunikationsanlage, und
- Figur 3: den Aufbau eines Endgerätes für die paketbasierte Sprachübertragung.

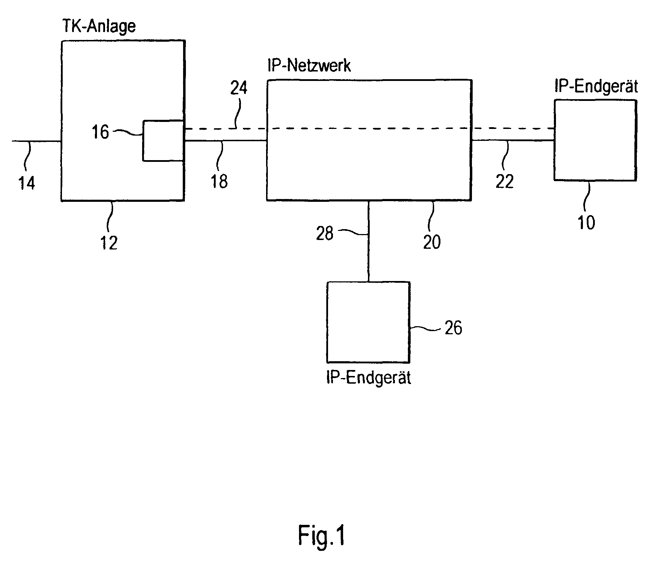

Figur 1 zeigt den Anschluß eines paketbasiert arbeitenden Endgerätes 10 an eine Telekommunikationsanlage 12. Bei dem Endgerät 10 handelt es sich um ein Endgerät, das gemäß ITU-T-Standard H.323 arbeitet. Als Übertragungsprotokoll verwendet das Endgerät 10 das Internet-Protokoll IP/TCP. Eine in Figur 1 nicht dargestellte Einheit des Endgerätes 10 dient zur Spracheingabe und zur Sprachausgabe. Aus den eingegebenen Sprachsignalen werden im Endgerät 10 Sprachdaten erzeugt, die auf Datenpakete aufgeteilt werden. Andererseits werden im Endgerät 10 in empfangenen Datenpaketen enthaltene Sprachdaten im Endgerät 10 wieder in Sprachsignale umgewandelt und ausgegeben.

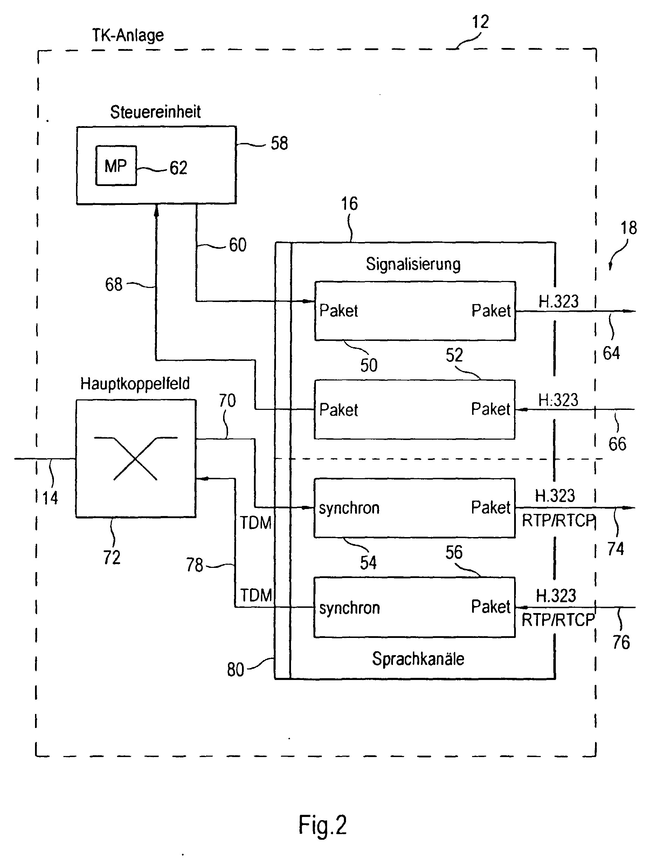

Bei der Telekommunikationsanlage 12 handelt es sich um eine durchschaltevermittelnde Telekommunikationsanlage. Dies bedeutet, daß Verbindungen von Sprachkanälen für die Dauer eines Gesprächs fest zugeordnet werden. Die Telekommunikationsanlage 12 ist über Amtsleitungen 14 mit einer digitalen Vermittlungseinrichtung in einem öffentlichen Fernsprechnetz verbunden, z.B. im Fernsprechnetz der TELEKOM AG. Eine Anschlußbaugruppe 16 in der Telekommunikationsanlage 12 ermöglicht den Anschluß des Endgerätes 10. Der Aufbau der Anschlußbaugruppe 16 wird unten an Hand der Figur 2 erläutert. An der Anschlußbaugruppe 16 ist eine Leitung 18 angeschlossen, die zu einem Intranet 20 gehört. Das Intranet 20 dient einer Privatfirma sowohl für die interne Datenübertragung als auch für die interne Sprachübertragung.

Zum Intranet 20 gehört auch eine Leitung 22, an deren einem Ende das Endgerät 10 angeschlossen ist. Somit kann vom Endgerät 10 über die Leitung 22, das Intranet 20 und die Leitung 18 eine Verbindung 24 zur Telekommunikationsanlage 12 aufgebaut werden.

In Figur 1 ist außerdem ein Endgerät 26 dargestellt, das mit Hilfe einer Leitung 28 an das Intranet 20 angeschlossen ist. Das Endgerät 26 arbeitet ebenfalls gemäß Standard H.323.

Figur 2 zeigt den Aufbau der Anschlußbaugruppe 16. Die Anschlußbaugruppe 16 befindet sich in der Telekommunikationsanlage 12 und enthält vier Umwandlungseinheiten 50 bis 56, deren Funktion im folgenden erläutert wird.

Zur Umwandlungseinheit 50 führt von einer Steuereinheit 58 der Telekommunikationsanlage 12 eine Signalisierungsstrecke 60. Die Steuereinheit 58 enthält einen Mikroprozessor 62, der Befehle in einem nicht dargestellten Speicher der Telekommunikationsanlage 12 abarbeitet und dabei zentrale Aufgaben der Telekommunikationsanlage 12 ausführt. Dabei werden auf der Signalisierungsstrecke 60 gemäß einem paketbasierten Signalisierungsprotokoll Signalisierungsdaten an die Umwandlungseinheit 50 gesendet. Bei dem Signalisierungsprotokoll handelt es sich um dasselbe Protokoll, das zwischen der Telekommunikationsanlage und den für diese Anlage vorgesehenen Endgeräten verwendet wird. Wird als Telekommunikationsanlage 12 beispielsweise eine Anlage vom Typ HICOM der Firma SIEMENS AG verwendet, so ist ein für diese Anlage geeignetes Endgerät ein Endgerät vom Typ OPTISET, das Sprachdaten in Sprachkanälen überträgt.

Ausgangsseitig ist die Umwandlungseinheit 50 mit einer Signalisierungsstrecke 64 verbunden, die zwischen der Umwandlungseinheit 50 und dem Endgerät 10 liegt. Die Umwandlungseinheit 50 wandelt über die Signalisierungsstrecke 60 gemäß dem internen Signalisierungsprotokoll der Telekommunikationsanlage 12 empfangene Signale in Signale gemäß dem im Standard H.323 festgelegten Signalisierungsprotokoll um und sendet diese Signale über die Signalisierungsstrecke 64 an das Endgerät 10.

Die Umwandlungseinheit 52 empfängt vom Endgerät 10 über eine Signalisierungsstrecke 66 Signalisierungsdaten gemäß dem Standard H.323. In der Umwandlungseinheit 52 werden die empfangenen Signale in Signale gemäß dem internen Signalisierungsprotokoll der Telekommunikationsanlage 12 umgewandelt. Die umgewandelten Signale werden von der Umwandlungseinheit 52 über eine Signalisierungsstrecke 68 zur Steuereinheit 58 übertragen. Die beiden Übertragungsstrecken 60 und 68 lassen sich mit Hilfe einer bidirektional arbeitenden Verbindung zwischen Steuereinheit 58 und Anschlußbaugruppe 16 realisieren.

Die Umwandlungseinheit 54 dient der Umwandlung von Sprachsignalen in Sprachdaten. Ausgangsseitig ist die Umwandlungseinheit 54 über eine Übertragungsstrecke 70 mit einem Hauptkoppelfeld 72 der Telekommunikationsanlage 12 verbunden. Das Hauptkoppelfeld 72 ist andererseits u.a. mit der Amtsleitung 14 verbunden, so daß abhängig von den im Hauptkoppelfeld 72 geschalteten Verbindungen Sprachsignale beispielsweise von der Amtsleitung 14 über die Übertragungsstrecke 70 zur Umwandlungseinheit 54 gelangen. Die Übertragung der Sprachsignale erfolgt gemäß PCM-Verfahren (pulse code modulation) und somit in Kanälen gemäß einem Zeitmultiplexverfahren, das auch als TDM bezeichnet wird (time division multiplex). In der Umwandlungseinheit 54 werden die synchron in bestimmten Kanälen übertragenen Sprachsignale in Sprachdaten umgewandelt und auf Datenpakete verteilt. Die Datenpakete werden über eine Übertragungsstrecke 74 gemäß einem im Standard H.323 festgelegten Übertragungsprotokoll zum Endgerät 10 übertragen. Als Übertragungsprotokoll wird das Übertragungsprotokoll RTP/RTCP (Real Time Protocol/Real Tinte Control Protocol) verwendet.

Die Übertragungsstrecken 64, 66, 74 und 76 sind sogenannte logische Übertragungsstrecken auf der Leitung 18. An Hand von Kennzeichen werden die auf der Leitung 18 übertragenen Datenpakete einer Übertragungsstrecke 64, 66, 74 oder 76 zugeordnet.

Die Umwandlungseinheit 56 empfängt eingangsseitig in Datenpaketen vom Endgerät 10 auf einer Übertragungsstrecke 76 gesendete Sprachdaten. Diese Sprachdaten werden vom Endgerät 10 wiederum gemäß Standard H.323 und gemäß der Protokolle RTP/RTCP gesendet. In der Umwandlungseinheit 56 werden die empfangenen Sprachdaten in Sprachsignale umgewandelt, die in synchronen Kanälen mit Hilfe des PCM-Verfahrens über eine Übertragungsstrecke 78 von der Umwandlungseinheit 56 zum Hauptkoppelfeld 72 übertragen werden. Vom Hauptkoppelfeld 72 werden die Sprachsignale beispielsweise zur Amtsleitung 14 vermittelt.

Die Übertragungsstrecken 70 und 78 sind beispielsweise zwei PCM-Kanäle, die über dieselbe Verbindungsleitung übertragen werden. Die Signalisierungsstrecken 64 und 66 sowie die Übertragungsstrecken 74 und 76 werden durch die Leitung 18 gebildet. Eine Schnittstelle 80 entspricht der an einem Endgerät vom Typ OPTISET vorhandenen Schnittstelle zur Telekommunikationsanlage 12.

In den Umwandlungseinheiten 50 und 52 wird bei der Umwandlung geprüft, ob eine Sprachverbindung zum Endgerät aufgebaut oder abgebaut werden muß. Muß eine Sprachverbindung aufgebaut werden, so wird von der Umwandlungseinheit 50 bzw. 52 eine entsprechende Anforderung an die Umwandlungseinheit 54 und/oder 56 gestellt, welche dann die Sprachverbindung unter Verwendung des Signalisierungsprotokolls gemäß ITU-Standard H.225 und H.245 aufbauen (nicht dargestellt).

Die Funktion der paketorientierten Sprachübertragung mit zusätzlichen Leistungsmerkmale wird im folgenden mit Bezug auf die Figuren 1 und 2 erläutert. Im Endgerät 10 werden zusätzliche Leistungsmerkmale für die paketbasierte Sprachübertragung angeboten. Wird vom Benutzer des Endgerätes 10 eines dieser Leistungsmerkmale ausgewählt, so wird über die Signalisierungsstrecke 66 eine entsprechende Anforderung gesendet. Die Anforderung wird in der Umwandlungseinheit 52 umgewandelt und an die Steuereinheit 68 über die Signalisierungsstrecke 58 weitergeleitet. Die Steuereinheit 58 veranlaßt, daß das ausgewählte Leistungsmerkmal in der Telekommunikationsanlage 12 aktiviert wird. Dabei auftretende Signale werden über die Signalisierungsstrecke 60 zur Umwandlungseinheit 50 signalisiert. Die Umwandlungseinheit 50 leitet die Signale nach einer Protokollumwandlung über die Signalisierungsstrecke 64 an das Endgerät 10 weiter. Von der Seite der Steuereinheit 58 aus wird das Endgerät 10 wie ein Endgerät vom Typ OPTISET angesteuert. Ebenso erzeugt die Umwandlungseinheit 52 nur solche Signale, wie sie auch von einem Endgerät des Typs OPTISET erzeugt werden.

Zusätzliche Leistungsmerkmale der Telekommunikationsanlage 12 können auch vom Endgerät 26 genutzt werden. Dazu ist das Endgerät 26 an die Telekommunikationsanlage 12 ebenfalls über die Anschlußbaugruppe 16 oder über eine nicht dargestellte Anschlußbaugruppe angeschlossen, die den gleichen Aufbau wie die Anschlußbaugruppe 16 hat. Sollen Leistungsmerkmale der Telekommunikationsanlage 12 bei einer Sprachübertragung zwischen dem Endgerät 10 und dem Endgerät 26 genutzt werden, so muß die Verbindung über die Telekommunikationsanlage 12 geschaltet werden.

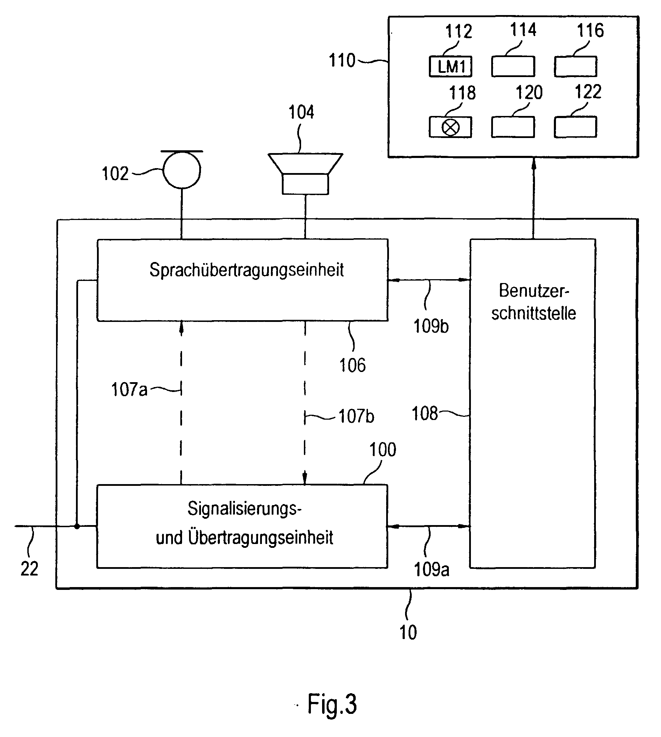

Figur 3 zeigt den Aufbau des Endgerätes 10. Die Leitung 22 ist mit einer Signalisierungs- und Übertragungseinheit 100 verbunden, welche Signalisierungsdaten in Datenpaketen gemäß dem ITU-T-Standard H.323 empfängt und sendet. Das Endgerät 10 enthält zur Eingabe von Sprachsignalen ein Mikrofon 102. Zur Ausgabe von Sprachsignalen enthält das Endgerät 10 einen Lautsprecher 104. Das Mikrofon 102 und der Lautsprecher 104 sind mit einer Sprachübertragungseinheit 106 verbunden, die Sprachdaten aus den am Ausgang des Mikrofons 102 auftretenden Signalen erzeugt und gemäß einem dem ITU-T-Standard H.323 entsprechenden Übertragungsprotokoll in Datenpaketen überträgt. Dazu ist die Sprachübertragungseinheit 106 ebenfalls mit der Leitung 22 verbunden. Über die Leitung 22 empfangene Sprachdaten werden in der Sprachübertragungseinheit in elektrische Signale zur Ansteuerung des Lautsprechers 104 umgewandelt.

Die Signalisierungs- und Übertragungseinheit 100 arbeitet beim Aufbau und Abbau einer Sprachverbindung mit der Sprachübertragungseinheit 106 zusammen. Auf der Leitung 22 werden an die Gegenseite gemäße ITU-Standard H.225 und H.245 Signalisierungsdaten zum Aufbau bzw. Abbau der Sprachverbindung gesendet.

Zwischen der Signalisierungs- und Übertragungseinheit 100 und der Sprachübertragungseinheit 106 gibt es Steuerleitungen 107a und 107b. Über die Steuerleitung 107a wird der Sprachübertragungseinheit 106 mitgeteilt, daß eine Sprachverbindung zwischen Endgerät 10 und Anschlußbaugruppe 16 besteht. Außerdem wird der Sprachübertragungseinheit 106 signalisiert, welche Nummer die Datenpakete mit den Sprachdaten zur Kennzeichnung der Verbindung haben sollen. Weitere Mitteilungen zur Signalisierung auf der Steuerleitung 107a ergeben sich aus dem ITU-T-Standard H.323. Auch die auf der Steuerleitung 107b übertragenen Mitteilungen ergeben sich aus dem Standard H.323.

Eine Benutzerschnittstelle 108 des Endgeräts 10 enthält Programme, bei deren Abarbeiten zusätzliche Leistungsfunktionen im Endgerät 10 genutzt werden können. Die Benutzerschnittstelle 108 ist über bidirektionale Steuerleitungen 109a bzw. 109b mit der Signalisierungs- und Übertragungseinheit 100 bzw. der Sprachübertragungseinheit 106 verbunden.

Außerdem werden mit Hilfe der Benutzerschnittstelle 108 auf einem am Endgerät 10 angeschlossenen Bildschirm 110 Bedienelemente dargestellt, mit denen sich die zusätzlichen Leistungsfunktionen nutzen lassen. In Fig. 3 sind drei Bedientasten 112, 114 und 116 dargestellt, unter denen sich jeweils ein Anzeigefeld 118 bis 120 befindet.

Der Bedientaste 112 ist das Leistungsmerkmal LM1 "Anruf halten" zugeordnet. Wird dieses Leistungsmerkmal von einer Bedienperson mit Hilfe einer Computer-Maus ausgewählt, so wird das unter der Bedientaste 112 liegende Anzeigefeld 118 in einem leuchtenden Zustand dargestellt. Das Betätigen der Bedientaste 112 wird von der Bedienschnittstelle 108 an die Signalisierungs- und Übertragungseinheit 100 über die Steuerleitung 109a signalisiert. In der Signalisierungs- und Übertragungseinheit 100 wird ein Befehl erzeugt, der eine Mitteilung darüber enthält, daß die Bedientaste 112 gedrückt worden ist. In der Anschlußbaugruppe 16, vgl. Fig. 2, wird das Signalisierungsprotokoll gemäß Standard H.323 in ein Signalisierungsprotokoll gemäß dem in der Telekommunikationsanlage 12 verwendeten Signalisierungsprotokoll umgewandelt. Dabei wird aus den über die Leitung 22 übertragenen Datenpaketen der Befehl "Taste gedrückt" entpackt und gemäß Stimulus-Protokoll an die Steuereinheit 58 weitergeleitet.

Die Steuereinheit 58 trennt dann eine bisher bestehende Verbindung zwischen einem mit der Telekommunikationsanlage 12 verbundenen Teilnehmer und dem Benutzer des Endgerätes 10. Für den Benutzer des Endgerätes 10 wird der Wählton in die Übertragungsstrecke 70 eingespeist, so daß er letztlich über den Lautsprecher 104 hörbar ist. Für den anderen Teilnehmer wird eine Melodie erzeugt, die einen Wartezustand anzeigt. Die Steuereinheit 58 erzeugt außerdem gemäß Stimulus-Protokoll einen Stimulus für das Anzeigefeld 118. Dieser Stimulus wird in der Umwandlungseinheit 50 in ein Datenpaket eingebettet, das zum Endgerät 10 übertragen wird. In der Signalisierungs- und Übertragungseinheit 100 werden die über die Leitung 22 empfangenen Datenpakete nach Befehlen durchsucht, welche die zusätzlichen Leistungsmerkmale betreffen. Wird ein solcher Befehl gefunden, so wird er über die Steuerleitung 109a an die Benutzerschnittstelle 108 weitergegeben. Auch der Befehl zum Einschalten des Anzeigefeldes 118 wird an die Benutzerschnittstelle 108 weitergegeben. In der Benutzerschnittstelle 108 wird veranlaßt, daß das Anzeigefeld 118 im leuchtenden Zustand auf dem Bildschirm 110 dargestellt.

Durch das Verwenden des erfindungsgemäßen Verfahrens sind die Abläufe im Endgerät bei der Nutzung des Leistungsmerkmals vergleichsweise einfach. Wollte man im Endgerät 10 das Leistungsmerkmal dezentral, d.h. ohne Einbeziehung einer Telekommunikationsanlage 12 nutzen, so müßten die meisten Abläufe im Endgerät 10 durchgeführt werden. In der Signalisierungs- und Übertragungseinheit 100 sowie in der Sprachübertragungseinheit 106 müßten definierte Abläufe programmiert werden. Beispielsweise würde die Signalisierungs- und Übertragungseinheit 100 beim Drücken der Bedientaste 112 der Sprachübertragungseinheit 106 über die Steuerleitung 107a signalisieren, daß die Sprachwege zum entfernten Teilnehmer zu trennen sind. Dem "gehaltenen Teilnehmer" müßte von der Signalislerungs- und Übertragungseinheit 100 gemäß Standard H.323 signalisiert werden, daß er sich im gehaltenen Zustand befindet. Das Endgerät 10 müßte weiterhin selbst veranlassen, daß das Anzeigefeld 118 eingeschaltet wird. Auch das Erzeugen eines Wähltons im Lautsprecher 104 müßte durch das Endgerät 10 erfolgen.

## Patentansprüche

1. Verfahren zur Übertragung von Sprachdaten in Datenpaketen unter Nutzung zusätzlicher Leistungsmerkmale,
bei dem eine Vermittlungseinrichtung verwendet wird, die Sprachverbindungen in einem Telekommunikationsnetz durchschaltet, in welchem Sprachdaten in Sprachkanälen übertragen werden,
die Vermittlungseinrichtung (12) über eine Schnittstelleneinheit (16) mit einer Endeinheit (10) verbunden wird, die Sprachdaten in Datenpaketen überträgt,
die Schnittstelleneinheit (16) von der Vermittlungseinrichtung (12) kommende Übertragungssignale (60, 70) in Übertragungssignale (64, 74) für die Endeinheit (10) und/oder von der Endeinheit (10) kommende Übertragungssignale (66, 76) in Übertragungssignale (68, 78) für die Vermittlungseinrichtung (12) umwandelt,
auf der Seite der Endeinheit (10) neben den Grundfunktionen zur Übertragung von Sprachsignalen mindestens ein zusätzliches Leistungsmerkmal für die Sprachübertragung mittels Datenpakete nutzbar ist,
und bei dem beim Benutzen des zusätzlichen Leistungsmerkmals in der Vermittlungseinrichtung (12) zur Steuerung der Endeinheit Verfahrensschritte ausgeführt werden, die bei der Nutzung der zusätzlichen Leistungsmerkmal durch ein Endgerät auszuführen sind, das Sprachdaten in einem Sprachkanal überträgt.

2. Verfahren nach Anspruch 1,
**dadurch gekennzeichnet,** daß das zusätzliche Leistungsmerkmal auf der Seite der Endeinheit (10) ausgewählt wird,
die Endeinheit (10) der Schnittstelleneinheit (16) die Auswahl gemäß einem Datenpakete verwendenden Signalisierungsprotokoll (66) signalisiert,
und daß die Schnittstelleneinheit (16) die empfangenen Signale gemäß einem für die Vermittlungseinrichtung (12) festgelegten Signalisierungsprotokoll (68) weiterleitet.

3. Verfahren nach einem der vorhergehenden Ansprüche,
**dadurch gekennzeichnet,** daß das zusätzliche Leistungsmerkmal auf der Seite der Vermittlungseinrichtung (12) ausgewählt wird,
daß die Vermittlungseinrichtung (12) beim Ausführen des zusätzlichen Leistungsmerkmals gemäß einem für die Vermittlungseinrichtung (12) festgelegten Signalisierungsprotokoll (60) an die Schnittstelleneinheit (16) Signale sendet, die mit den beim Ausführen der zusätzlichen Leistungsmerkmal an ein Sprachdaten in einem Sprachkanal übertragendes Endgerät zu sendenden Signalen übereinstimmen,
und daß die Schnittstelleneinheit (16) die empfangenen Signale gemäß einem Datenpakete verwendenden Signalisierungsprotokoll (64) weiterleitet.

4. Verfahren nach Anspruch 2 oder 3,
**dadurch gekennzeichnet,** daß das Datenpakete verwendende Signalisierungsprotokoll (64, 66) gemäß ITU-T-Standard H.323 arbeitet,
und/oder daß das für die Vermittlungseinrichtung (12) festgelegte Signalisierungsprotokoll (60, 68) ebenfalls auf der Basis von Datenpaketen arbeitet.

5. Verfahren nach einem der vorhergehenden Ansprüche,
**dadurch gekennzeichnet,** daß die Sprachdaten gemäß einem Übertragungsprotokoll (76) für Datenpakete von der Endeinheit (10) zur Schnittstelleneinheit (16) übertragen werden,
und daß die Schnittstelleneinheit (16) die empfangenen Sprachdaten entpackt und gemäß einem Verfahren (TDM) für Sprachübertragung in einem Sprachkanal an die Vermittlungseinrichtung (12) weiterleitet.

6. Verfahren nach einem der vorhergehenden Ansprüche,
**dadurch gekennzeichnet,** daß die Vermittlungseinrichtung (12) Sprachsignale zur Schnittstelleneinheit (16) gemäß einem Verfahren (TDM) für Sprachübertragung in einem Sprachkanal sendet,
und daß die Schnittstelleneinheit (16) die empfangenen Sprachsignale auf Datenpakete verteilt und gemäß einem Übertragungsprotokoll (74) für Datenpakete an die Endeinheit (10) weiterleitet.

7. Verfahren nach Anspruch 5 oder 6,
**dadurch gekennzeichnet,** daß das Übertragungsprotokoll (74, 76) dem ITU-T-Standard H.323 entspricht, und/oder daß das Verfahren (TDM) für Sprachübertragung in einem Sprachkanal ein Zeitmultiplexverfahren ist.

8. Verfahren nach einem der vorhergehenden Ansprüche,
**dadurch gekennzeichnet,** daß die Endeinheit (10) mit der Schnittstelleneinheit (16) über ein Datenübertragungsnetz (20) verbunden ist, in welchem Daten auf der Basis von Datenpaketen übertragen werden,
und daß am Datenübertragungsnetz (20) mehrere Endgeräte (10, 26) angeschlossen sind, mit denen Sprachdaten übertragen werden können.

9. Verfahren nach Anspruch 8,
**dadurch gekennzeichnet,** daß eine am Datenübertragungsnetz (20) angeschlossene Zugangseinrichtung den Zugang vom Endgerät (10) zum Datenübertragungsnetz (20) kontrolliert,
und daß die Zugangseinrichtung die Rufnummer einer Endeinheit des Telekommunikationsnetzes in eine Adresse einer Endeinheit im Datenübertragungsnetz (20) und/oder eine Adresse in eine Rufnummer umwandelt.

10. Anschlußbaugruppe (16) für die Übertragung von Sprachdaten in Datenpaketen unter Nutzung zusätzlicher Leistungsmerkmale,
mit einem ersten Signalisierungsanschluß (60, 68) zum Übertragen von Signalisierungsdaten gemäß einem für eine Vermittlungseinrichtung (12) festgelegten Signalisierungsprotokoll, einem zweiten Signalisierungsanschluß (64, 66) zum Übertragen von Signalisierungsdaten in Datenpaketen gemäß einem Signalisierungsprotokoll für Datenübertragungsnetze (20),
einer zwischen den Signalisierungsanschlüssen (60, 64 bis 68) angeschlossenen Signalisierungseinheit (50, 52) zum Umwandeln der Signalisierungsdaten des einen Signalisierungsprotokolls in Signalisierungsdaten des anderen Signalisierungsprotokolls,
einem ersten Übertragungsanschluß (70, 78) zum Übertragen von Sprachdaten in einem Sprachkanal gemäß einem für die Vermittlungseinrichtung (12) festgelegten Verfahren,
einem zweiten Übertragungsanschluß (74, 76) zum Übertragen von Sprachdaten gemäß einem auf der Basis von Datenpaketen arbeitenden Übertragungsprotokoll,
und mit einer zwischen den Übertragungsanschlüssen (70, 74 bis 78) angeschlossenen Übertragungseinheit (54, 56) zum Aufteilen der im Sprachkanal übertragenen Sprachdaten auf Datenpakete und/oder zum Entpacken von in Datenpaketen übertragenen Sprachdaten.

11. Vermittlungseinrichtung (12),
**gekennzeichnet durch** eine Anschlußbaugruppe (16) nach Anspruch 10.

12. Gerät,
**gekennzeichnet durch** eine Anschlußbaugruppe (16) nach Anspruch 10.

13. Programm für die Übertragung von Sprachdaten in Datenpaketen unter Nutzung zusätzlicher Leistungsmerkmale,
mit einer durch den Prozessor einer Datenverarbeitungsanlage ausführbaren Befehlsfolge,
**dadurch gekennzeichnet,** daß die Datenverarbeitungsanlage beim Ausführen der Befehlsfolge veranlaßt wird, die Schritte nach einem der Ansprüche 1 bis 9 durchzuführen.

14. Verfahren zur Übertragung von Sprachdaten in Datenpaketen unter Nutzung zusätzlicher Leistungsmerkmale,
bei dem eine Sprachübertragungseinheit (106) Sprachdaten in Datenpaketen gemäß einem Übertragungsprotokoll überträgt, in einer Bedienschnittstelle (108) neben den Grundfunktionen zur Übertragung von Sprachsignalen mindestens ein zusätzliches Leistungsmerkmal für die Sprachübertragung nutzbar ist, eine Signalisierungseinheit (100) Signalisierungsdaten in Datenpaketen gemäß einem Signalisierungsprotokoll für ein Datenübertragungsnetz (20) überträgt,
und bei dem beim Benutzen des zusätzlichen Leistungsmerkmals in der Bedienschnittstelle (108) die Signalisierungseinheit (100) so angesteuert wird, daß in den Datenpaketen Signalisierungsbefehle in das Datenübertragungsnetz (20) gesendet werden, die anzeigen, daß das zusätzliche Leistungsmerkmal benutzt werden soll,
und/oder bei dem die von der Signalisierungseinheit (100) aus dem Datenübertragungsnetz empfangenen Datenpakete Signalisierungsbefehle enthalten, welche die Nutzung des Leistungsmerkmals anzeigen, und bei dem beim Empfang von Signalisierungsbefehlen die Sprachübertragungseinheit (106) und/oder die Bedienschnittstelle (108) so angesteuert wird, wie es das Leistungsmerkmal erfordert.

15. Einheit (10) für die Übertragung von Sprachdaten in Datenpaketen unter Nutzung zusätzlicher Leistungsmerkmale, mit einer Sprachübertragungseinheit (106), die Sprachdaten in Datenpaketen gemäß einem Übertragungsprotokoll überträgt, einer Bedienschnittstelle (108) die neben den Grundfunktionen zur Übertragung von Sprachsignalen mindestens ein zusätzliches Leistungsmerkmal für die paketbasierte Sprachübertragung nutzbar macht,
einer Signalisierungseinheit (100) zum Übertragen von Signalisierungsdaten in Datenpaketen gemäß einem Signalisierungsprotokoll für ein Datenübertragungsnetz (20),
**dadurch gekennzeichnet,** daß die Signalisierungseinheit mit einem Anschluß zum Anschluß der Einheit an das Datenübertragungsnetz 20 verbunden ist,
daß die Bedienschnittstelle (108) die Signalisierungseinheit (100) beim Benutzen des zusätzlichen Leistungsmerkmals so ansteuert, daß am Anschluß Datenpakete mit Signalisierungsbefehlen gesendet werden, die anzeigen, daß das zusätzliche Leistungsmerkmal benutzt werden soll,
und/oder daß die Signalisierungseinheit (100) abhängig von am Anschluß empfangenen Datenpaketen mit Signalisierungsbefehlen, welche die Nutzung des Leistungsmerkmals anzeigen, die Sprachübertragungseinheit (106) und/oder die Bedienschnittstelle (108) so ansteuert, wie es das Leistungsmerkmal erfordert.

16. Programm für die Übertragung von Sprachdaten in Datenpaketen unter Nutzung zusätzlicher Leistungsmerkmale,
mit einer durch den Prozessor einer Datenverarbeitungsanlage ausführbaren Befehlsfolge,
**dadurch gekennzeichnet,** daß die Datenverarbeitungsanlage beim Ausführen der Befehlsfolge veranlaßt wird, die Schritte nach Anspruch 14 durchzuführen.
